# EUROPÄISCHE PATENTSCHRIFT

(11) **EP 1 645 786 B1**
(45) Veröffentlichungstag und Bekanntmachung des Hinweises auf die Patenterteilung: **28.12.2011**
(21) Anmeldenummer: 05021116.8
(22) Anmeldetag: 28.09.2005
(51) Int. Cl.: F16D 48/02, F16H 61/02, B60W 10/02, B60W 10/10

(54) **Vorrichtung und Verfahren zum hydraulischen Steuern eines Kupplungsgetriebes**
Hydraulic control apparatus and method for a gearbox with clutch
Dispositif et méthode de commande hydraulique d'une boite de vitesses avec embrayage

(30) Priorität: 08.10.2004 DE 102004049050
(43) Veröffentlichungstag der Anmeldung: 12.04.2006
(73) Patentinhaber: AUDI AG, 85045 Ingolstadt (DE)
(72) Erfinder: Gieles, Wim, 85139 Wettstetten (DE)
(74) Vertreter: Thielmann, Frank

(56) Entgegenhaltungen:
- EP-A- 1 400 733
- EP-A- 1 635 091
- DE-C1- 4 117 736
- GB-A- 2 368 886

## Beschreibung

Die vorliegende Erfindung betrifft eine Vorrichtung und ein Verfahren zum hydraulischen Steuern eines Kupplungsgetriebes, insbesondere in einem Kraftfahrzeug.

Aus dem Stand der Technik sind derartige Vorrichtungen und Verfahren grundsätzlich bekannt.

So ist unter der Typenbezeichnung DQ 250 ein Doppelkupplungsgetriebe mit zwei ineinander geschachtelten Teilgetrieben und einer Steuerungsvorrichtung bekannt, wobei die Steuerungsvorrichtung zwei Steuerungszweige umfaßt, von denen jeder eines der Teilgetriebe hydraulisch ansteuert. Jeder dieser Steuerungszweige wird von einer gemeinsamen Systemdruckleitung der Steuerungsvorrichtung mit Hydraulikflüssigkeit gespeist. Innerhalb jedes Steuerungszweiges ist ein Teilgetriebe-Druckregelventil vorgesehen, welches den Druck der Hydraulikflüssigkeit für jeden Steuerungszweig regelt; auf diese Weise wird ein Kupplungssteller und mindestens ein Gangsteller des Steuerungszweiges erforderlichenfalls mit ausreichendem Druck versorgt. Zwischen dem Teilgetriebe-Druckregelventil und dem Kupplungssteller ist bei dem genannten Getriebe DQ 250 ein zweites Druckregelventil geschaltet. Durch diese Anordnung wird sichergestellt, dass es selbst beim Ausfall eines der beiden Druckregelventile trotzdem möglich ist, eine dem Kupplungssteller nachgeschaltete Kupplung zu öffnen. Zur Ansteuerung des Kupplungsstellers sind also zwei hochwertige und teure Druckregelventile in Reihe geschaltet.

Auch aus der gattungsbildenden EP 1 400 733 A2 ist eine hydraulische Steuerungsvorrichtung eines Doppelkupplungsgetriebes bekannt. Das Doppelkupplungsgetriebe besteht aus zwei Teilgetrieben mit jeweils einer aktiv schließenden Motorkupplung und mehreren schaltbaren Gängen. Die hydraulische Steuerungsvorrichtung umfasst als zentrale Bestandteile eine Druckversorgungseinrichtung mit einer Systemdruckleitung. An die Systemdruckleitung angeschlossen sind zwei Steuerzweige zum Steuern von jeweils einem der beiden Teilgetriebe. Jeder Steuerzweig umfasst einen Kupplungssteller zum Stellen der Motorkupplung des jeweiligen Teilgetriebes und mindestens einen Gangsteller zum Einlegen der Gänge in dem jeweiligen Teilgetriebe. Den Kupplungsstellern und den Gangstellern ist jeweils ein Durchflussventil unmittelbar vorgeschaltet und den Durchflussventilen ist in mindestens einem der Steuerzweige ein gemeinsames Druckregelventil vorgeschaltet.

Sowohl das in dem DQ 250-System dem Kupplungssteller vorgeschaltete zweite Druckregelventil sowie das laut der Europäischen Patentanmeldung EP 1 400 733 A2 dem Kupplungssteller vorgeschaltete Durchflussventil sind relativ teuer. Für das Funktionieren des Kupplungsgetriebes und insbesondere dessen Kupplung bedarf es jedoch weder einer Druckregelung, wie sie von dem Druckregelventil grundsätzlich ermöglicht wird, noch einer Durchflussregelung oder -steuerung, wie sie von dem Durchflussventil grundsätzlich ermöglicht wird; insofern sind sowohl das Druckregelventil wie auch das Durchflussventil zur Ansteuerung des Kupplungstellers überqualifiziert. Zum Einlegen eines Ganges, d.h. während einer Gangstelloperation muss in einem Kupplungsgetriebe und insbesondere in einem Teilgetriebe die Kupplung jeweils geöffnet sein, weil sich die Gänge sonst nicht schalten lassen. Erst wenn die Gänge eingelegt sind, darf die Kupplung wieder geschlossen werden. Zum Funktionieren des Kupplungsgetriebes ist es deswegen erforderlich, dass zu einer bestimmten Zeit Druck zum Ansteuern der Kupplung und zu einer anderen Zeit Druck zum Ansteuern der Gangsteller vorhanden ist. Zu keiner Zeit ist jedoch es erforderlich, dass gleichzeitig Druck zum Ansteuern des Kupplungstellers und der Gangsteller vorhanden ist, wie es die im Stand der Technik den Kupplungstellern vorgeschalteten Ventile, das zweite Druckregelventil oder das Durchflussventil, grundsätzlich ermöglichen.

Bei einem Verfahren zum Steuern eines Kupplungsgetriebes gemäß der EP 1 635 091 A1 baut eine Pumpe in einer Sammelleitung einen Betriebsdruck auf. An die Sammelleitung ist ein Druckregelventil angeschlossen, dessen Ausgang über ein Umschaltventil In einer ersten Schaltstellung mit einer Kupplung verbunden ist. In einer zweiten Schaltstellung des Umschaltventils wird der von dem Druckregelventil eingestellte Druck über einen Druckumschalter in eine Leitung überführt, von welcher aus das Druckmedium über ein Schaltventil zwei Schaltzylindern zuführbar ist. Die Schaltzylinder dienen dem Schalten der Gänge des Kupplungsgetriebes.

In diesem Zusammenhang sei noch auf die DE 41 17 736 C1 verwiesen, die eine hydraulische Steuerungsvorrichtung für ein automatisiertes Doppelkupplungsgetriebe offenbart. Die Steuerungsvorrichtung umfasst einen Kupplungssteller je Teilgetriebe sowie mehrere Gangsteller, denen jeweils ein Schaltventil vorgeschaltet ist, eine Druckregelvorrichtung je Kupplungssteller und eine Umschaltvorrichtung. Mittels der Umschaltvorrichtung werden vier Schaltzustände verwirklicht, wobei eine erste Druckregelvorrichtung mit einem ersten Kupplungssteller, einem zweiten Kupplungssteller oder den Gangstellern verbunden wird, während eine zweite Druckregelvorrichtung entweder mit dem zweiten Kupplungssteller oder mit dem ersten Kupplungssteller verbunden oder abgesperrt wird. Sind die Kupplungssteller mit den Druckregelvorrichtungen verbunden, so sind die Gangsteller abgesperrt. Sind die Gangsteller mit der ersten Druckregelvorrichtung verbunden, so ist ein Kupplungssteller mit einem Hauptdrucksystem und der andere Kupplungssteller mit einer Rücklaufleitung verbunden.

Bei einem hydraulischen Betätigungssystem gemäß der GB 2 368 886 A wird in einem Steuerzweig ein Druck nicht mittels Druckregelventilen eingestellt, sondern einem Druckspeicher ist ein Schaltventil nachgeschaltet. Ein Kupplungssteller kann über das Schaltventil mit einem Tank oder mit dem Druckspeicher verbunden werden.

Ausgehend von diesem Stand der Technik ist es die Aufgabe der Erfindung, ein bekanntes Verfahren und eine bekannte Vorrichtung zum hydraulischen Ansteuern eines Kupplungsgetriebes, insbesondere für Kraftfahrzeuge, derart weiterzubilden, dass sie mit geringeren Kosten und geringerem Bauvolumen realisiert werden können.

Diese Aufgabe wird durch den in Patentanspruch 1 beanspruchten Gegenstand gelöst. Dieser ist dadurch gekennzeichnet, dass das dem Kupplungssteller unmittelbar vorgeschaltete Ventil als hydraulisches Schaltventil aus gebildet ist, das den Kupplungssteller entweder mit dem Tank oder mit dem Druckregelventil verbindet.

Für den Betrieb des Kupplungsgetriebes und insbesondere von dessen Kupplung, ist es zu keiner Zeit erforderlich, dass über eine Hydraulikflüssig keit gleichzeitig Druck zum Ansteuern eines Kupplungstellers und mindestens eines Gangstellers bereit gestellt wird. Es ist deshalb ausreichend, wenn das dem Kupplungsteller vorgeschaltete Ventil lediglich als einfaches hydraulisches Schaltventil ausgebildet ist. Das Schaltventil ermöglicht lediglich ein Ein- und Ausschalten des dem Kupplungsteller zugeführten Volumenstromes der Hydraulikflüssigkeit im Ansprechen auf ein entsprechendes Schaltsignal. Weil das Schaltventil lediglich die besagte Ein-/Ausschaltfunktion realisiert, ist es wesentlich einfacher als ein Durchfluss- oder Druckregelventil ausgebildet und kann deshalb vorteilhafterweise preisgünstiger als ein Druckregelventil oder Durchflussventil erworben werden. Weiterhin bietet ein Schaltventil gegenüber den genannten anderen Ventilen den Vorteil, dass es in der Regel ein geringeres Bauvolumen aufweist. Auf Grund der Tatsache, dass die erfindungsgemäße Ausbildung der Steuerungsvorrichtung einer Reihenschaltung eines Druckregelventils mit dem besagten Schaltventil zur Ansteuerung des Kupplungsstellers vorsieht, ist vorteilhafterweise gewährleistet, dass ein Öffnen der Kupplung auch bei Ausfall von einem dieser Ventile möglich ist.

Besonders vorteilhaft ist die beanspruchte Steuerungsvorrichtung für Doppelkupplungsgetriebe mit zwei Teilgetrieben einzusetzen; dann wird jedes der Teilgetriebe von einem ihm individuell zugeordneten Steuerzweig der hydraulischen Steuerungsvorrichtung individuell angesteuert. Insbesondere die jeweiligen Kupplungen der Teilgetriebe lassen sich dann mit den erfindungsgemäß vorgeschalteten Schaltventilen kostengünstig und bauvolumenreduziert ansteuern.

Weitere vorteilhafte Ausgestaltungen der Steuervorrichtung sind Gegenstand der Unteransprüche.

Die oben genannte Aufgabe wird weiterhin durch ein Verfahren zum Steuern eines Kupplungsgetriebes gelöst. Die Vorteile diese Verfahrens entsprechen den oben mit Bezug auf die Steuerungsvorrichtung genannten Vorteilen.

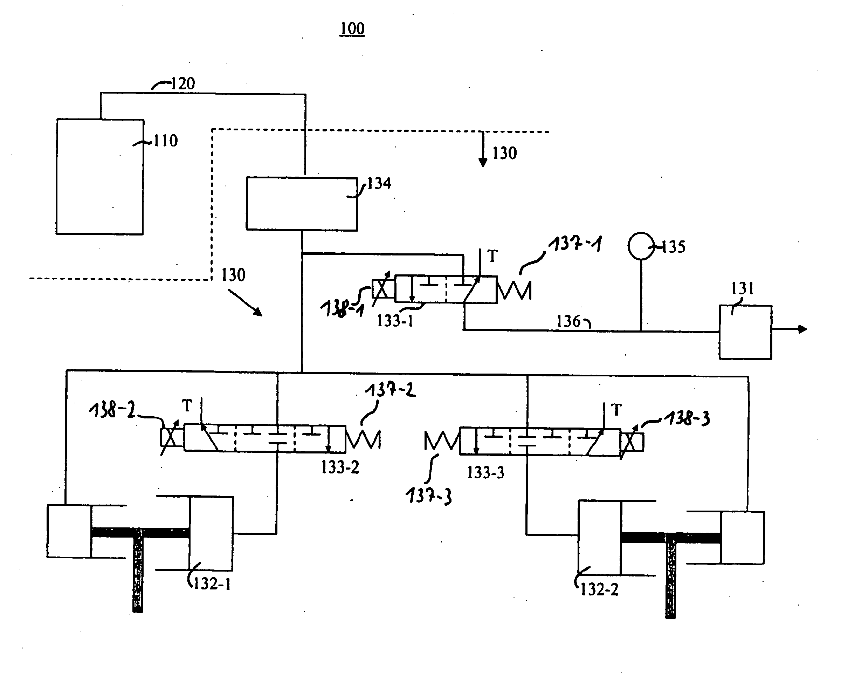

Es folgt eine Beschreibung eines Ausführungsbeispiels für die erfindungsgemäße hydraulische Steuerungsvorrichtung unter Bezugnahme auf die der Beschreibung beigefügte einzige Figur.

Die Figur veranschaulicht die erfindungsgemäße hydraulische Steuervorrichtung 100 für ein Kupplungsgetriebe (nicht gezeigt), z.B. in einen Kraftfahrzeug. Die Steuerungsvorrichtung 100 weist eine Druckversorgungseinrichtung 110 mit einer Systemdruckleitung 120 auf zum Bereitstellen einer Hydraulikflüssigkeit mit einem gewünschten Systemdruck, d.h. Getriebedruck. An die Systemdruckleitung 120 ist mindestens ein Steuerzweig 130 angeschlossen, welcher über die Systemdruckleitung 120 mit der Hydraulikflüssigkeit unter Druck versorgt wird. In der beigefügten Figur ist lediglich ein solcher Steuerzweig 130 an die Systemdruckleitung angeschlossen. Wenn das Kupplungsgetriebe jedoch als Doppelkupplungsgetriebe mit zwei ineinander geschachtelten Teilgetrieben ausgebildet ist (hier nicht gezeigt), dann sind an die Systemdruckleitung 120 zwei separate Hydrauliksteuerzweige angeschlossen, von denen jeder eines der Teilgetriebe ansteuert.

Im Folgenden wird der erfindungsgemäße Aufbau von einem solchen Steuerzweig beispielhaft unter Bezugnahme auf die Figur beschrieben. Der in der Figur gezeigte Steuerzweig 130 umfasst einen Kupplungssteller 131 zum Stellen einer Kupplung (nicht gezeigt), des Kupplungsgetriebes. Weiterhin umfasst er zwei Gangsteller 132-1, 132-2 zum Einlegen eines vorbestimmten Ganges durch das Kupplungsgetriebe. Dem Kupplungssteller 131 ist über eine Hydraulikleitung 136 ein einfaches Schaltventil 133-1 vorgeschaltet. Demgegenüber sind den beiden Gangstellern 132-1, 132-2 beispielsweise jeweils Durchflussventile 133-2, 133-3 mit oder ohne Durchflussregelfunktion oder auch Schaltventile, mit oder ohne Multiplexer, vorgeschaltet. Sowohl das Schaltventil 133-1 wie auch die Durchflussventile 133-2, 133-3 werden von dem Ausgang eines den Ventilen gemeinsam vorgeschalteten Druckregelventils 134 mit der Hydraulikflüssigkeit gespeist. Über das Druckregelventil sind die Durchflussventile und das Schaltventil an die Systemdruckleitung 120 angeschlossen. Das Druckregelventil 134 regelt den Druck der Hydraulikflüssigkeit in dem Steuerzweig auf einen gewünschten Teilgetriebe-Druckwert ein. Die Regelung erfolgt typischerweise unter Berücksichtigung des von einem Drucksensor 135 in der Hydraulikleitung 136 erfassten Druckes der dort vorhandenen Hydraulikflüssigkeit. Wie in der Figur zu erkennen ist, ist dem Kupplungssteller 131 das Druckregelventil 134 und das Schaltventil 133-1 in Reihe vorgeschaltet. Durch diese hydraulische Schaltungskonfiguration wird sichergestellt, dass ein Öffnen der Kupplung über den Kupplungssteller 131 auch bei Ausfall von einem der Ventile 133-1 oder 134 noch möglich ist. Federn 137-1, 137-2, 137-3 und Elektromagneten 138-1, 138-2 und 138-3 sorgen dafür, dass die Kupplung bei Stromausfall geöffnet bleibt.

Während eines Betriebs der in der Figur gezeigten Steuerungsvorrichtung wird grundsätzlich der Druck der Hydraulikflüssigkeit in dem Steuerzweig 130 über das zentrale Druckregelventil 134 geregelt. Zum Einlegen eines Gangs ist es zunächst erforderlich, dass die Kupplung (hier nicht gezeigt) mit Hilfe des Kupplungsstellers 131 geöffnet wird. Dafür ist es erforderlich, dass dem Kupplungssteller 131 eingangsseitig keine Hydraulikflüssigkeit mehr unter Druck zugeführt wird. Zu diesem Zweck wiederum wird das Schaltventil 133-1 geöffnet, d.h. ausgeschaltet. Der Kupplungssteller 131 wird dabei über das Schaltventil mit dem Tank verbunden, die Kupplung durch ihre Rückstellfeder geöffnet und das Öl über das Schaltventil 133-1 zum Tank entleert. Um die Kupplung in geöffneter Stellung zu halten, ist kein hydraulischer Druck auf der Eingangsseite des Kupplungsstellers 131 erforderlich; deshalb muß das Schaltventil nach dem Ende des Öffnungsvorganges der Kupplung ausgeschaltet bleiben.

Bei geöffneter Kupplung werden dann die Eingänge der Gangsteller 132-1 und 132-2 über die Hydraulikflüssigkeit, welche durch die den Gangstellern vorgeschalteten Durchflussventile 133-2 und 133-3 fließt, mit Druck beaufschlagt, um das Einlegen eines gewünschten Ganges zu bewirken.

Nach dem Einlegen eines Gangs ist es erforderlich, dass die Kupplung wieder geschlossen wird, um einen Kraftschluss in dem Kupplungsgetriebe zu bewirken. Zum Schließen der Kupplung ist es wiederum erforderlich, dass der Kupplungsteller 131 eingangsseitig mit Druck beaufschlagt wird. Dazu wird zuerst der Teilgetriebedruck im Druckregler 134 unter den Greifpunkt der Kupplung eingestellt. Die Gangsteller werden dabei über die Durchflussventile in ihrer Stellung permanent nachgeregelt, beim eingelegten Gang eventuell auch im Anschlag gedrückt. Dann wird das Schaltventil 133-1 wieder geöffnet, d. h. eingeschaltet, woraufhin der Druck am Ausgang des Druckregelventils 134 über die Hydraulikflüssigkeit in der Hydraulikleitung 136 auf den Eingang des Kupplungstellers 131 geleitet wird. Der Druck am Ausgang des Druckregelventils 134 wird wieder erhöht, was ein Schließen der Kupplung bewirkt.

## Patentansprüche

1. Hydraulische Steuerungsvorrichtung (100) für ein Kupplungsgetriebe, wobei die Steuerungsvorrichtung (100) eine Druckversorgungseinrichtung (110) mit einer Systemdruckleitung (120) zum Bereitstellen einer Hydraulikflüssigkeit mit einem gewünschten Systemdruck, und mindestens einen an die Systemleitung angeschlossenen Steuerzweig (130) aufweist, welcher umfasst:
genau einen Kupplungssteller (131) zum Stellen einer Kupplung des Kupplungsgetriebes;
mindestens einen Gangsteller (132-1, 132-2) zum Einlegen eines vorbestimmten Gangs in dem Kupplungsgetriebe;
genau ein dem Kupplungssteller (131) hydraulisch vorgeschaltetes Ventil (133-1);
ein dem Gangsteller (132-1, 132-2) hydraulisch vorgeschaltetes Ventil (133-2, 133-3); und
genau ein den Ventilen (133-1, 133-2, 133-3) gemeinsam vorgeschaltetes Druckregelventil (134) zum hydraulischen Anbinden der Ventile an die Systemdruckleitung (120) und zum Regeln des Druckes der Hydraulikflüssigkeit in dem Steuerzweig (130); wobei sowohl das dem Kupplungssteller (131) hydraulisch vorgeschaltete Ventil (133-1) wie das dem Gangsteller (132-1, 132-2) hydraulisch vorgeschaltete Ventil (133-2, 133-3) von dem Ausgang des Druckregelventils (134) direkt gespeist werden,
**dadurch gekennzeichnet, dass**
das dem Kupplungssteller (131) vorgeschaltete Ventil (133-1) als hydraulisches Schaltventil ausgebildet ist, das den Kupplungssteller (131) entweder mit einem Tank oder mit dem Druckregelventil (134) verbindet.

2. Steuerungsvorrichtung nach Anspruch 1, **dadurch gekennzeichnet, dass** das dem Gangsteller (132-1, 132-2) vorgeschaltete Ventil (133-2, 133-3) als Durchflussventil ausgebildet ist.

3. Steuerungsvorrichtung nach einem der vorangegangenen Ansprüche, **dadurch gekennzeichnet, dass** in einer Hydraulikleitung (136) zwischen dem Schaltventil (133-1) und dem Kupplungssteller (131) ein Drucksensor (135) vorgesehen ist zum Erfassen des aktuellen Druckes der Hydraulikflüssigkeit.

4. Steuerungsvorrichtung nach einem der vorangegangenen Ansprüche, **dadurch gekennzeichnet, dass** das Kupplungsgetriebe als Doppelkupplungsgetriebe mit zwei vorzugsweise ineinander geschachtelten Teilgetrieben ausgebildet ist, wobei jedes Teilgetriebe eine separate Kupplung aufweist und jedem Teilgetriebe individuell jeweils ein Steuerzweig (130) zugeordnet ist.

5. Verfahren zum Steuern eines Kupplungsgetriebes über eine hydraulische Steuervorrichtung (100) mit einer Druckversorgungseinrichtung (110) und mindestens einem Steuerzweig (130), wobei das Verfahren für jeden Steuerzweig folgende Schritte umfasst:
Regeln des Druckes einer Hydraulikflüssigkeit in dem Steuerzweig mittels genau eines dem Steuerzweig zugeordneten Druckregelventils (134);
Öffnen einer Kupplung des Kupplungsgetriebes mit Hilfe genau eines dem Steuerzweig zugeordneten Kupplungsstellers (131);
Einlegen eines Ganges in dem Kupplungsgetriebe mit Hilfe eines dem Steuerzweig (130) zugeordneten Gangstellers (132-1, 132-2); und
Schließen der Kupplung über den Kupplungssteller (131), nachdem der Gang eingelegt wurde;
**dadurch gekennzeichnet, dass**
das Öffnen und Schließen der Kupplung jeweils durch ein Ein- und Ausschalten des dem Kupplungssteller (131) über die Hydraulikleitung (136) zugeführten Volumenstromes der Hydraulikflüssigkeit mittels genau eines zwischen das Druckregelventil (134) und den Kupplungssteiler (131) geschalteten hydraulischen Schaltventils (133-1) erfolgt,
das den Kupplungssteller (131) entweder mit einem Tank oder mit dem Druckregelventil (134) verbindet,
wobei bei mit dem Kupplungssteller (131) verbundenem Druckregelventil (134) sowohl das dem Kupplungssteller (131) hydraulisch vorgeschaltete Ventil (133-1) wie das dem Gangsteller (132-1, 132-2) hydraulisch vorgeschaltete Ventil (133-2, 133-3) direkt von Hydraulikflüssigkeit gespeist werden, welche den Ventilen (133-1, 133-2, 133-3) von dem Druckregelventil (134) kommend zugeleitet wird.

## Claims

1. Hydraulic control device (100) for a clutch gearbox, wherein the control device (100) has a pressure supply device (110) with a system pressure line (120) for providing a hydraulic fluid at a desired system pressure, and has at least one control branch (130) which is connected to the system line and which comprises:
precisely one clutch actuator (131) for actuating a clutch of the clutch gearbox;
at least one gear actuator (132-1, 132-2) for engaging a predetermined gear in the clutch gearbox;
precisely one valve (133-1) connected hydraulically upstream of the clutch actuator (131);
a valve (133-2, 133-3) connected hydraulically upstream of the gear actuator (132-1, 132-2); and precisely one pressure regulating valve (134), connected upstream of all of the valves (133-1, 133-2, 133-3), for hydraulically connecting the valves to the system pressure line (120) and for regulating the pressure of the hydraulic fluid in the control branch (130); wherein both the valve (133-1) connected hydraulically upstream of the clutch actuator (131) and also the valve (133-2, 133-3) connected hydraulically upstream of the gear actuator (132-1, 132-2) are fed directly from the outlet of the pressure regulating valve (134),
**characterized in that**
the valve (133-1) connected upstream of the clutch actuator (131) is designed as a hydraulic switching valve which connects the clutch actuator (131) either to a tank or to the pressure regulating valve (134).

2. Control device according to Claim 1, **characterized in that** the valve (133-2, 133-3) connected upstream of the gear actuator (132-1, 132-2) is designed as a throughflow valve.

3. Control device according to one of the preceding claims, **characterized in that** a pressure sensor (135) is provided in a hydraulic line (136) between the switching valve (133-1) and the clutch actuator (131) in order to detect the present pressure of the hydraulic fluid.

4. Control device according to one of the preceding claims, **characterized in that** the clutch gearbox is designed as a dual-clutch gearbox having two component gearboxes preferably nested one inside the other, wherein each component gearbox has a separate clutch and each component gearbox is individually assigned in each case one control branch (130).

5. Method for controlling a clutch gearbox by means of a hydraulic control device (100) with a pressure supply device (110) and at least one control branch (130), wherein the method comprises the following steps for each control branch:
regulating the pressure of a hydraulic fluid in the control branch by means of precisely one pressure regulating valve (134) assigned to the control branch;
opening a clutch of the clutch gearbox by means of precisely one clutch actuator (131) assigned to the control branch;
engaging a gear in the clutch gearbox by means of a gear actuator (132-1, 132-2) assigned to the control branch (130); and
closing the clutch by means of the clutch actuator (131) after the gear has been engaged;
**characterized in that**
the opening and closing of the clutch is realized in each case by virtue of the hydraulic fluid volume flow which is supplied to the clutch actuator (131) via the hydraulic line (136) being activated and deactivated by means of precisely one hydraulic switching valve (133-1) which is connected between the pressure regulating valve (134) and the clutch actuator (131) and which connects the clutch actuator (131) either to a tank or to the pressure regulating valve (134), wherein, when the pressure regulating valve (134) is connected to the clutch actuator (131), both the valve (133-1) connected hydraulically upstream of the clutch actuator (131) and also the valve (133-2, 133-3) connected hydraulically upstream of the gear actuator (132-1, 132-2) are fed directly with hydraulic fluid which is conducted to the valves (133-1, 133-2, 133-3) proceeding from the pressure regulating valve (134).

## Revendications

1. Dispositif de commande hydraulique (100) pour une boîte de vitesses avec embrayage, dans lequel le dispositif de commande (100) présente un dispositif d'alimentation de pression (110) avec une conduite de pression de système (120) pour la fourniture d'un liquide hydraulique avec une pression de système désirée, et au moins une branche de commande (130) raccordée à la conduite de système, qui comprend:
- exactement un actionneur d'embrayage (131) pour actionner un embrayage de la boîte de vitesses avec embrayage;
- au moins un actionneur de changement de vitesse (132-1, 132-2) pour engager un rapport prédéterminé dans la boîte de vitesses avec embrayage;
- exactement une soupape (133-1) installée hydrauliquement avant l'actionneur d'embrayage (131);
- une soupape (133-2, 133-3) installée hydrauliquement avant l'actionneur de changement de vitesse (132-1, 132-2); et
- exactement une soupape de régulation de pression (134) commune installée avant les soupapes (133-1, 133-2, 133-3), pour la liaison hydraulique des soupapes à la conduite de pression de système (120) et pour la régulation de la pression du liquide hydraulique dans la branche de commande (130); dans lequel aussi bien la soupape (133-1) installée hydrauliquement avant l'actionneur d'embrayage (131) que la soupape (133-2,133-3) installée hydrauliquement avant l'actionneur de changement de vitesse (132-1, 132-2) sont alimentées directement à partir de la sortie de la soupape de régulation de pression (134),
**caractérisé en ce que** la soupape (133-1) installée hydrauliquement avant l'actionneur d'embrayage (131) est réalisée sous la forme d'une soupape de commande hydraulique, qui relie l'actionneur d'embrayage (131) soit à un réservoir soit à la soupape de régulation de pression (134).

2. Dispositif de commande selon la revendication 1, **caractérisé en ce que** la soupape (133-2, 133-3) installée avant l'actionneur de changement de vitesse (132-1, 132-2) est réalisée sous la forme d'une soupape de débit.

3. Dispositif de commande selon l'une quelconque des revendications précédentes, **caractérisé en ce qu'**il est prévu un capteur de pression (135) dans une conduite hydraulique (136) entre la soupape de commande (133-1) et l'actionneur d'embrayage (131), pour détecter la pression actuelle du liquide hydraulique.

4. Dispositif de commande selon l'une quelconque des revendications précédentes, **caractérisé en ce que** la boîte de vitesses avec embrayage est réalisée sous la forme d'une boîte de vitesse avec embrayage double avec deux boîtes de vitesses partielles de préférence emboîtées l'une dans l'autre, dans lequel chaque boîte de vitesses partielle présente un embrayage séparé et une branche de commande (130) est respectivement associée individuellement à chaque boîte de vitesses partielle.

5. Procédé de commande d'une boîte de vitesses avec embrayage au moyen d'un dispositif de commande hydraulique (100) avec un dispositif d'alimentation de pression (110) et au moins une branche de commande (130), dans lequel le procédé comprend les étapes suivantes pour chaque branche de commande:
- réguler la pression d'un liquide hydraulique dans la branche de commande au moyen précisément d'une soupape de régulation de pression (134) associée à la branche de commande;
- ouvrir un embrayage de la boîte de vitesses avec embrayage à l'aide précisément d'un actionneur d'embrayage (131) associé à la branche de commande;
- engager un rapport dans la boîte de vitesses avec embrayage à l'aide d'un actionneur de changement de vitesse (132-1, 132-2) associé à la branche de commande (130) et fermer l'embrayage au moyen de l'actionneur d'embrayage (131) après que le rapport ait été engagé; **caractérisé en ce que**
- l'ouverture et la fermeture de l'embrayage sont effectuées respectivement par une connexion et une déconnexion du flux volumique du liquide hydraulique envoyé à l'actionneur d'embrayage (131) par la conduite hydraulique (136) au moyen précisément d'une soupape de commande hydraulique (133-1) installée entre la soupape de régulation de pression (134) et l'actionneur d'embrayage (131) et qui relie l'actionneur d'embrayage (131) soit à un réservoir soit à la soupape de régulation de pression (134),
- dans lequel, lorsque la soupape de régulation de pression (134) est reliée à l'actionneur d'embrayage (131), aussi bien la soupape (133-1) installée hydrauliquement avant l'actionneur d'embrayage (131) que la soupape (133-2, 133-3) installée hydrauliquement avant l'actionneur de changement de vitesse (132-1, 132-2) sont alimentées directement en liquide hydraulique, qui est fourni aux soupapes (133-1, 133-2, 133-3) en provenance de la soupape de régulation de pression (134).
